# EUROPEAN PATENT APPLICATION

(11) **EP 4 625 628 A1**
(43) Date of publication of application: **01.10.2025**
(21) Application number: 23895007.5
(22) Date of filing: 21.11.2023
(51) Int. Cl.: H01M 50/124, H01M 50/121, H01M 50/119, B32B 15/088, B32B 15/085, B32B 15/09, H01M 50/131

(54) **PACKAGING MATERIAL FOR BATTERY**

(30) Priority: 22.11.2022 KR 20220157551
(71) Applicant: Lotte Chemical Corporation, Seoul 05551 (KR)
(72) Inventor: CHO, Jin Ju, Daejeon 34110 (KR); KIM, Song Ho, Daejeon 34110 (KR); OH, Sun Hyung, Daejeon 34110 (KR); CHOI, Byung Doo, Daejeon 34110 (KR); MOON, Yun A, Daejeon 34110 (KR); KIM, Yong Bin, Daejeon 34110 (KR)
(74) Representative: Germain Maureau
(86) International application number: PCT/KR2023/018818
(87) International publication number: WO 2024/112080

(57) **Abstract**

Disclosed is a packaging material for a battery, including a lamination structure of: an outer layer consisting of a heat-resistant resin film; a gas barrier layer containing a metal foil; and an inner layer consisting of a composition containing a thermoplastic polyolefin, wherein the slipperiness of the inner layer is enhanced to achieve excellent moldability, causing no leakage of cell electrolytes and thereby ensuring safety. The present invention provides a packaging material for a battery, including a lamination structure of: an outer layer consisting of a heat-resistant resin film; a gas barrier layer containing a metal foil; and an inner layer consisting of a composition containing a thermoplastic polyolefin, wherein the composition constituting the inner layer contains an unsaturated secondary fatty acid amide.

## Description

### Technical Field

The present invention relates to a packaging material for batteries, and more specifically, to a packaging material for batteries having a lamination structure of an outer layer, a gas barrier layer including a metal foil, and an inner layer.

This application claims the benefit of Korean Patent Application No. 10-2022-0157551, filed on November 22, 2022, in the Korean Intellectual Property Office, the disclosure of which is incorporated herein in its entirety by reference.

### BACKGROUND ART

Batteries, which usually refer to lithium batteries, are used in portable terminal devices (*e.g.,* laptops, smartphones, tablet PCs, video cameras, etc.), electric vehicles including hybrid vehicles, smart grids for energy storage, etc. and research is underway to overcome various environmental factors (e.g., harsh thermal environments, mechanical shocks, etc.) while simultaneously reducing size, weight, and thickness.

As a packaging material used in these lithium batteries, battery pouches are used as an external material made of a multi-layered structure (e.g., an inner resin layer, an aluminum layer, and an outer resin layer), which differ from a conventional can-type packaging material and has the advantage of being able to freely transform the shape of batteries. Commonly used battery pouch films are composed of a multi-layered film structure sequentially composed of an internal resin layer, which consists of an adhesive layer made of polyolefin polyethylene (PE), casted polypropylene (cPP), polypropylene (PP), etc. or a copolymer thereof having heat-adhesive properties and serves as a sealing agent; an aluminum layer, which is a metal foil layer that acts as a barrier layer between a substrate that maintains mechanical strength and moisture and oxygen; and an outer resin layer, which is formed by a functional polymer film *(e.g.,* polyethylene terephthalate (PET), polyethylene naphthalate (PEN), nylon, liquid crystal polymer (LCP), etc.) to protect the battery cell from external shock.

Conventionally, packaging materials that had mainly been used were those which were molded into a cylindrical or parallelepiped shape by pressing metal, particularly aluminum. However, in the case of such a metal can packaging material, the outer wall of the container is rigid, and thus, there is a limitation in that the shape of the battery itself must be determined by the shape of the metal can packaging material.

In order to overcome the limitation, packaging technology consisting of a multi-layered plastic film has been developed. For example, Korean Patent Application Publication No. 2003-0029141 discloses a cell pouch composed of a base layer, an adhesive layer, a barrier layer, a dry lamination layer, and a sealant layer, in which the sealant layer is composed of a low fluidity polypropylene layer and a high fluidity polypropylene layer. Additionally, Korean Patent Application Publication No. 2002-0030737 discloses a cell pouch, which is laminated on a base film and a surface protection layer using biaxially stretched nylon, polyethylene terephthalate (PET), and polyolefin resin, and a technology for coating a fluorine-based, silicone-based, or acrylic-based resin as secondary processing.

Pouch-type batteries provide the advantages of shape flexibility and enable the implementation of batteries of the same capacity with reduced volume and mass. However, unlike the can type batteries, the pouch type batteries employ a soft pouch as a container, and thus, these batteries may be damaged for various reasons during various processes. For example, during the process of storing the electrode assembly inside the pouch, protruding parts (e.g., electrode tabs, electrode leads, etc.) cause damage such as cracks to the PP and cPP layers inside the pouch, and when the aluminum layer is exposed due to this damage, side reactions occur due to reactivity with the electrolyte. The aluminum layer exposed to the electrolyte as such may corrode due to a chemical reaction between the electrolyte and oxygen or moisture that has penetrated or diffused into the battery, thereby causing a swelling phenomenon that generates corrosive gas and expands the inside of the battery. Specifically, lithium hexafluorophosphate (LiPF₆) may react with water and oxygen to generate hydrofluoric acid (HF), which is a corrosive gas. This hydrofluoric acid may react with aluminum and cause a rapid exothermic reaction, or as a secondary reaction, when it is adsorbed to the aluminum surface and penetrates into the tissue, the brittleness of the tissue increases, and causes cracks in the pouch film even with micro-impacts, thereby causing electrolyte leakage. This may cause lithium to react with the atmosphere, and may result in ignition.

Meanwhile, the pouch-type packaging materials for batteries must have excellent heat resistance characteristics as they undergo a high-temperature process during pouch manufacture, and must have excellent moldability due to slipperiness to prevent electrolyte leakage from the pouch. Additionally, when surface blooming occurs, which causes white spots or patterns like flower blooming to appear on the film surface, it may cause adhesion failure after molding and accelerate oxidation and aging. Therefore, it is necessary to select a packaging material that does not cause surface blooming after molding.

According to Korean Patent Application Publication No. 2021-0063525, a polypropylene-based multilayer film containing an amide-based slip agent is disclosed as a polyolefin multilayer film for cell pouches, but does not provide a specific disclosure regarding the constitution to prevent electrolyte leakage after molding a pouch-type secondary battery.

According to Korean Patent Application Publication No. 10-1909577, a polypropylene resin composition containing an amide-based slip agent is disclosed, but does not specifically mention regarding the effect on improving moldability due to the inclusion of a specific amide-based slip agent.

### DISCLOSURE OF THE INVENTION

### TECHNICAL PROBLEM

Accordingly, the present invention aims to provide a packaging material for a battery, which includes a laminated structure of: an outer layer consisting of a heat-resistant resin film; a gas barrier layer including a metal foil; and an inner layer consisting of a composition comprising a thermoplastic polyolefin, which has excellent moldability due to increased slipperiness of the inner layer, and thus the electrolyte leakage from the cell can be prevented, thereby ensuring safety.

### TECHNICAL SOLUTION

In order to solve the above object, the present invention provides a packaging material for a battery, which includes an outer layer made of a heat-resistant resin film; a gas barrier layer containing a metal foil; and an inner layer consisting of a composition containing a thermoplastic polyolefin, in which the composition constituting the inner layer contains an unsaturated secondary fatty acid amide.

Additionally, the present invention provides a packaging material for a battery, which is characterized in that the unsaturated secondary fatty acid amide has a carbon number of 24 to 50.

Additionally, the present invention provides a packaging material for a battery, which is characterized in that the composition constituting the inner contains at least one type of acid-modified polypropylene.

Additionally, the acid-modified polypropylene provides a packaging material for a battery, which is characterized in that the maleic anhydride content is 1-10 wt%.

Additionally, the present invention provides a packaging material for a battery, which is characterized in that the composition constituting the inner layer contains acid-modified polypropylene, homopolypropylene, an ethylene-containing propylene copolymer, and amorphous propylene-based rubber.

Additionally, the present invention provides a packaging material for a battery, which is characterized in that the composition constituting the inner layer contains 3-10 wt% of acid-modified polypropylene, 30-60 wt% of homopolypropylene, 10-40 wt% of an ethylene-containing propylene copolymer, and 10-30 wt% of amorphous propylene-based rubber.

Additionally, the present invention provides a packaging material for a battery, which is characterized in that the unsaturated secondary fatty acid amide is comprised in an amount of 0.05-0.4 parts by weight based on 100 parts by weight of the total inner layer components excluding the unsaturated secondary fatty acid amide.

Additionally, the present invention provides a packaging material for a battery, which is characterized in that the heat-resistant resin is a polyamide-based resin or polyester-based resin.

Additionally, the present invention provides a packaging material for a battery, which is characterized in that the metal foil includes at least one metal selected from the group consisting of aluminum (Al), iron (Fe), copper (Cu), nickel (Ni), tin (Sn), zinc (Zn), indium (In), and tungsten (W).

Additionally, the present invention provides a packaging material for a battery, which is characterized in that the outer layer has a thickness of 15-30 µm; the gas barrier layer containing a metal foil has a thickness of 25-45 µm; and the inner layer has a thickness of 25-120 µm.

Additionally, the present invention provides a packaging material for a battery, which is characterized in that the friction coefficient measured according to the following method is 0.3 or less.

### [Method of measuring friction coefficient]

Packaging materials formed by dry lamination bonding were each left for 30 days at 25°C, 50°C, and 5°C, and then their dynamic coefficient of frictions of the inner layer surface were measured according to ASTM D1894 standard.

Additionally, the present invention provides a packaging material for a battery, which is characterized in that the maximum depth measured according to the method below as a forming performance is 5 mm or more.

### [Method of measuring forming performance]

After molding, the packaging material is left at a high temperature (50°C) for 7 days, and the packaging material is placed on a frame-shaped metal mold (10 cm × 10 cm) so that the outer layer touches the edge of the metal mold, and a square weight is placed on the inner layer of the packaging material (alloy stainless steel mold steel; 10 cm (width) × 10 cm (length) × 2 cm (height)) is pressed and drawn 5 times from 1 mm to 8 mm deep in 1 mm increments, causing bursting at the corners of the packaging material, and the maximum depth is measured when the phenomenon of bursting on the edge portion of the packaging material occurs 0 times.

### ADVANTAGEOUS EFFECTS

According to the present invention, it is possible to provide a packaging material for a battery, which includes a laminated structure of: an outer layer consisting of a heat-resistant resin film; a gas barrier layer including a metal foil; and an inner layer consisting of a composition comprising a thermoplastic polyolefin, which has excellent moldability by increasing slipperiness of the inner layer by adopting unsaturated secondary fatty acid amide as the compositing constituting the inner layer, and thus the electrolyte leakage from the cell can be prevented, thereby ensuring safety.

### MODE FOR CARRYING OUT THE INVENTION

Hereinafter, the present invention will be described in detail through preferred embodiments. Prior to this, the terms or words used in this specification and claims should not be interpreted as limited to their usual or dictionary meanings. Instead, they should be interpreted as meanings and concepts that conform to the technical idea of the present invention based on the principle that the inventors can appropriately define the concept of the term in order to explain their invention in the best way. Accordingly, the constitutions of the embodiments described in this specification are merely the most preferred embodiments of the present invention and do not represent the entirety of the technical idea of the present invention, and it should be understood that there may be various equivalents and modified examples that can replace them at the time of filing this application.

The present invention discloses a packaging material for a lithium battery, which is a packaging material for a battery including a laminated structure of: an outer layer consisting of a heat-resistant resin film; a gas barrier layer including a metal foil; and an inner layer consisting of a composition comprising a thermoplastic polyolefin; wherein the composition constituting the inner layer includes an unsaturated secondary fatty acid amide.

The inner layer is a layer consisting of a composition containing thermoplastic polyolefin that is in contact with the electrolyte of the battery, which corresponds to the innermost layer of the battery packaging material, and thermal bonding is performed for the purpose of sealing the battery.

As a packaging material for a secondary battery, since the pouch type uses a soft pouch as a container, it may be damaged for various reasons during various processes, and thus, to prevent the damage, the moldability must be excellent by increasing slipperiness. Therefore, the present invention, by adopting an unsaturated secondary fatty acid amide containing a certain number of carbon atoms or more and a flash point of a certain temperature or more as a slip agent, enables to provide a battery packaging material, which has excellent moldability due to increased slipperiness of the inner layer, thereby preventing electrolyte leakage from the cell and having guaranteed safety.

In the present invention, the number of carbons of the unsaturated secondary fatty acid amide is preferably 24 or more, more preferably 24 to 50, and even more preferably 34 to 40, from the aspect of performance compared to the ease of acquisition and handling of raw materials.

Additionally, the unsaturated secondary fatty acid amide preferably has a flash point exceeding 270°C, and more preferably 276-410°C. When the number of carbon atoms of the unsaturated secondary fatty acid amide is 22 or less and the flash point is 270°C or below, it may be lost during the high-temperature extrusion and lamination steps of the pouch manufacturing process, thereby resulting in molding defects due to reduced slipperiness during pouch molding.

The content of the unsaturated secondary fatty acid amide may be 0.05-0.4 parts by weight based on 100 parts by weight of the total inner layer components excluding the unsaturated secondary fatty acid amide. When the content of the unsaturated secondary fatty acid amide is less than 0.05 parts by weight, molding defects may occur due to insufficient slipperiness, whereas when it exceeds 0.4 parts by weight, slipperiness is sufficiently exhibited, but surface blooming may occur, thereby resulting in poor appearance.

Meanwhile, in the present invention, the composition containing thermoplastic polyolefin constituting the inner layer may be composed of multiple layers, preferably two or three layers.

In the present invention, the composition constituting the inner layer includes at least one type of acid-modified polypropylene, and maleic anhydride as a functional group of the acid-modified group may contain grafted modified polypropylene in an amount of 1-10 wt%, preferably 3-5 wt%. When the maleic anhydride content is less than 1 wt%, the adhesion with the gas barrier layer containing a metal foil may decrease, whereas when it exceeds 10 wt%, fisheye (F/E) and low molecules are generated due to a large amount of polar functional groups, which decreases the surface tension after corona surface treatment, thereby decreasing the adhesion with the gas barrier layer containing a metal foil. Preferably, in a layered configuration of two-or three-layers, the inner layer may be configured to be disposed in a layer that is in direct contact with the gas barrier layer containing a metal foil.

The inner layer may have a thickness of about 25-120 µm for sufficient thermal bonding properties, but is not limited thereto, and it may have an appropriate thickness according to the use of the cell pouch to be implemented, for example, whether it is a thin-film cell pouch implemented with a total thickness of about 88 µm, a general cell pouch implemented with a total thickness of about 113 µm, or a medium-to-large cell pouch implemented with a total thickness of about 153 µm.

In the present invention, the composition constituting the inner layer may further include homopolypropylene, an ethylene-containing propylene copolymer, and amorphous propylene-based rubber along with the acid-modified polypropylene, and in order to have a heat-resistant property while maximizing moldability through improved slipperiness, which are aimed in the present invention, by being combined with the above-described preferred content of the unsaturated secondary fatty acid amide, and may preferably contain 3-10 wt% of acid-modified polypropylene, 30-60 wt% of homopolypropylene, 10-40 wt% of an ethylene-containing propylene copolymer, and 10-30 wt% of amorphous propylene-based rubber, and more preferably 4-9 wt% of acid-modified polypropylene, 32-52 wt% of homopolypropylene, 20-30 wt% of an ethylene-containing propylene copolymer, and 15-25 wt% of amorphous propylene-based rubber.

The outer layer is the outermost layer of a lithium battery packaging material that is provided on a gas barrier layer containing a metal foil that can be exposed to the outside, and it is preferably formed using a material having heat resistance, cold resistance, pinhole resistance, insulation, chemical resistance, moldability, etc. along with abrasion resistance, so as to protect the gas barrier layer containing a metal foil. The outer layer consisting of such a heat-resistant resin film may include a polyamide-based resin or polyester-based resin. The polyamide-based resin may be nylon, which is advantageous for molding due to its high elongation, and the polyester-based resin may be polybutylene terephthalate (PBT) or polyethylene terephthalate (PET), which can achieve high chemical resistance, pinhole resistance, insulation, and mechanical strength, etc.

The outer layer may have a thickness of about 15-30 µm, considering all of sufficient abrasion resistance, heat resistance, pinhole resistance, chemical resistance, moldability, insulation, etc. When the thickness of the outer layer is too thin, the moldability of the battery packaging material may decrease due to insufficient strength of the outer layer. In contrast, when the thickness of the outer layer is too thick, the gas barrier layer including the inner layer and metal foil provided below the outer layer must be implemented with a relatively thin thickness, which may cause problems such as reduced thermal adhesive strength and reduced peel strength between each layer in the battery packaging material. However, the thickness of the outer layer is not limited to the above range, and the outer layer may have an appropriate thickness depending on the use of the cell pouch to be implemented, for example, a thin film-type cell pouch implemented with a total thickness of about 88 µm, a conventional cell pouch implemented with a total thickness of about 113 µm, or a medium- to large-sized cell pouch with a total thickness of about 153 µm.

In the present invention, a first adhesive resin layer may be further formed so as to adhere the outer layer to the gas barrier layer containing a metal foil.

The first adhesive resin layer may be formed by an adhesive capable of bonding the outer layer and the gas barrier layer containing a metal foil, and the adhesive used to form the first adhesive resin layer may be a two-component curing type adhesive or one-component curing type adhesive. Additionally, the bonding mechanism of the adhesive used to form the first adhesive resin layer is not particularly limited, and any one may be selected from a chemical reaction type, a solvent volatilization type, a heat melt type, a heat pressure type, etc.

The resin components of an adhesives that can be used to form the first adhesive resin layer may include, for example, polyester-based resins *(e.g.,* polyethylene terephthalate, polybutylene terephthalate, polyethylene naphthalate, polybutylene naphthalate, polyethylene isophthalate, polycarbonate, copolyester, etc.); polyether-based adhesives; polyurethane-based adhesives; epoxy-based resins; phenolic resin-based resins; polyamide-based resins (e.g., nylon 6, nylon 66, nylon 12, copolyamide, *etc.);* polyolefin-based resins *(e.g.,* polyolefin, acid-modified polyolefin, metal-modified polyolefin, *etc.);* polyvinyl acetate-based resins; cellulose-based adhesives; (meta)acrylic resins; polyimide-based resins; amino resins *(e.g.,* urea resin, melamine resin, etc.); rubbers *(e.g.,* chloroprene rubber, nitrile rubber, styrene-butadiene rubber, etc.); silicone-based resins; fluorinated ethylene propylene copolymers, etc. These adhesive components may be used individually or in combination of two or more types. The forms of combination of two or more adhesive components are not particularly limited, but the adhesive components may include, for example, a mixed resin of polyamide and acid-modified polyolefin, a mixed resin of polyamide and metal-modified polyolefin, a mixed resin of polyamide and polyester, a mixed resin of polyester and acid-modified polyolefin, a mixed resin of polyester and metal-modified polyolefin, etc. Among these, from the aspects of having excellent malleability, durability under high humidity conditions, inhibition of swelling, and inhibition of thermal deterioration during heat sealing while effectively inhibiting the occurrence of delamination by inhibiting a decrease in lamination strength between the outer layer and the gas barrier layer containing a metal foil, preferred examples include polyurethane-based two-component curable adhesive, polyamide, polyester, or a blend resin of these and modified polyolefin.

Meanwhile, the thickness of the first adhesive resin layer may be, for example, 2-10 µm.

The gas barrier layer containing a metal foil is intended to prevent the entry and exit of moisture or air from the outside and gas generated inside, and may come into contact with the inner layer. The gas barrier layer containing a metal foil may include a metal having gas barrier properties and moisture barrier properties, and may include, for example, one or more selected from the group consisting of aluminum (Al), iron (Fe), copper (Cu), nickel (Ni), tin (Sn), zinc (Zn), indium (In), tungsten (W), etc. (a single metal or a mixture of single metals), or an alloy of two or more selected therefrom, etc. In a preferred embodiment, the gas barrier layer containing a metal foil may include aluminum (Al) or an aluminum (Al) alloy in consideration of all moisture barrier properties, gas barrier properties, and moldability. The gas barrier layer containing a metal foil may have a thickness of about 25-45 µm for sufficient gas barrier and moisture barrier properties. However, the thickness of the gas barrier layer containing a metal foil is not limited thereto, and the gas barrier layer may have an appropriate thickness depending on the use of the cell pouch to be implemented, for example, a thin film-type cell pouch implemented with a total thickness of about 88 µm, a conventional cell pouch implemented with a total thickness of about 113 µm, or a medium- to large-sized cell pouch with a total thickness of about 153 µm.

The gas barrier layer containing a metal foil is preferably chemically treated on at least one side, preferably at least the inner layer side, and preferably on both sides to stabilize adhesion and prevent dissolution or corrosion. In particular, chemical treatment is a treatment that forms an acid-resistant film on the surface of the gas barrier layer containing a metal foil. Chemical treatment may include, for example, chromic acid chromate treatment using chromic acid compounds *(e.g.,* chromium nitrate, chromium fluoride, chromium sulfate, chromium acetate, chromium oxalate, chromium pyrophosphate, chromate acetylacetate, chromium chloride, potassium chromium sulfate, *etc.);* phosphate chromate treatment using phosphoric acid compounds *(e.g.,* sodium phosphate, potassium phosphate, ammonium phosphate, polyphosphoric acid, etc.); chromate treatment using an aminated phenol polymer, etc.

A chemical treatment method for imparting corrosion resistance to a gas barrier layer containing a metal foil may include a method in which metal oxides (e.g., aluminum oxide, titanium oxide, cerium oxide, tin oxide, etc.) or fine particles of barium sulfate are dispersed in phosphoric acid and then baked at 150°C or higher, and thereby, a corrosion resistance treatment layer is formed on the surface of the gas barrier layer containing a metal foil. Additionally, a resin layer, which is crosslinked using a cationic polymer using a crosslinking agent, may be formed on the corrosion resistance treatment layer. In particular, the cationic polymer may include, for example, polyethyleneimine, an ionic polymer complex composed of a polymer containing polyethyleneimine and carboxylic acid, a primary amine grafted acrylic resin in which a primary amine is grafted onto the acrylic main framework, polyallyl amine, etc. derivatives thereof, aminophenol, *etc.* These cationic polymers may be used individually or in combination of two or more types. Examples of the crosslinking agent may include compounds having at least one functional group selected from the group consisting of an isocyanate group, a glycidyl group, a carboxyl group, and an oxazoline group; a silane coupling agent; *etc.* These crosslinking agents may be used individually or in combination of two or more types.

The chemical treatment may be performed individually or may be performed in combination of two or more types of chemical treatment. In addition, the chemical treatment may be performed using one compound alone or using two compounds in combination. Among these, chromic acid chromate treatment is preferred, and chromate treatment, in which a chromic acid compound, and a phosphoric acid compound, and an aminated phenol polymer are combined, is also preferred.

The chemical treatment is performed by applying a solution containing a compound used to form an acid-resistant film to the surface of the gas barrier layer containing a metal foil by a bar coat method, a roll coat method, a gravure coat method, a dipping method, etc., and then heated so that the metal foil has a temperature between 70°C and 200°C.

In the present invention, a second adhesive resin layer may be further formed to adhere the gas barrier layer containing a metal foil and the inner layer.

The second adhesive resin layer may be formed by an adhesive capable of bonding the outer layer and the gas barrier layer containing a metal foil. The adhesive used to form the second adhesive resin layer may be a two-component curing type adhesive or one-component curing type adhesive. Additionally, the bonding mechanism of the adhesive used to form the second adhesive resin layer is not particularly limited, and any of the chemical reaction type, solvent volatilization type, heat melt type, and heat pressure type may be selected.

Resin components of adhesives that may be used to form the second adhesive resin layer, for example, polyester-based resins (e.g., polyethylene terephthalate, polybutylene terephthalate, polyethylene naphthalate, polybutylene naphthalate, polyethylene isophthalate, polycarbonate, and copolyester, *etc*.); polyether-based adhesives; polyurethane-based adhesives; epoxy-based resins; phenolic resin-based resins; polyamide-based resins (*e.g.,* nylon 6, nylon 66, nylon 12, copolyamide, *etc*.); polyolefin-based resins (*e.g.,* polyolefin, acid-modified polyolefin, metal-modified polyolefin, *etc*.); polyvinyl acetate-based resins; cellulose-based adhesives; (meta)acrylic resins; polyimide-based resins; amino resins (*e.g.,* urea resin, melamine resin, e*tc*.); rubbers (*e.g.*, chloroprene rubber, nitrile rubber, styrene-butadiene rubber, *etc*.); silicone-based resins; fluorinated ethylene propylene copolymers, *etc.* These adhesive components may be used individually or in combination of two or more types. The forms of combination of two or more adhesive components are not particularly limited, but the adhesive components may include, for example, a mixed resin of polyamide and acid-modified polyolefin, a mixed resin of polyamide and metal-modified polyolefin, a mixed resin of polyamide and polyester, a mixed resin of polyester and acid-modified polyolefin, a mixed resin of polyester and metal-modified polyolefin, etc. Among these, from the aspects of having excellent malleability, durability under high humidity conditions, inhibition of swelling, and inhibition of thermal deterioration during heat sealing while effectively inhibiting the occurrence of delamination by inhibiting a decrease in lamination strength between the inner layer and the gas barrier layer containing a metal foil, preferred examples include polyurethane-based two-component curable adhesive, polyamide, polyester, or a blend resin of these and modified polyolefin.

Meanwhile, the thickness of the second adhesive resin layer may be, for example, 2-60 µm.

The method for producing a battery packaging material according to the present invention is not particularly limited as long as a laminated structure, in which each layer of a predetermined composition is laminated, can be obtained, and an exemplary method is illustrated hereinbelow.

First, a laminated structure (laminate A) is formed in which an outer layer, a first adhesive resin layer, and a gas barrier layer containing a metal foil are laminated in this order. The formation of the laminate A is specifically performed by applying the adhesives used for forming the first adhesive resin layer to the gas barrier layer containing a metal foil whose surface has been chemically treated using a coating method (e.g., an extrusion method, a gravure coating method, a roll coating method, etc.) followed by a dry lamination method, in which the first adhesive resin layer is cured by laminating the outer layer after coating and drying.

Then, the inner layer is laminated on the gas barrier layer containing a metal foil of the laminate A. For example, when the second adhesive resin layer is provided between the inner layer and the gas barrier layer containing a metal foil, (1) a method, in which the adhesive for forming the second adhesive resin layer is solution-applied onto the metal foil of the laminate A at a high temperature by a drying method, etc., and an inner layer formed in advance into a two- or three-layer sheet-like film is formed on this second adhesive resin layer by a heat lamination method (dry lamination method), (2) a method, in which the inner layer composed of two or three layers is laminated, by co-extrusion, on a gas barrier layer containing a metal foil of laminate A (co-extrusion lamination method), (3) a method, in which the laminate A and the inner layer are bonded through the second adhesive resin layer while the molten second adhesive resin layer is poured between the metal layer of laminate A and the inner layer previously formed into a two- or three-layer sheet form (sand lamination method), etc. may be used.

The above-described battery packaging material according to the present invention has excellent moldability by increasing the slipperiness of the inner layer, and thus, safety can be ensured by preventing electrolyte leakage from the cell, and specifically, the battery packaging material according to the present invention is as follows: the friction coefficient measured according to the method may be 0.3 or less, and the forming depth measured according to the method below as forming performance may be 5 mm or more, preferably 6 mm or more, and more preferably It may be 7 mm or more.

In particular, since the packaging material for pouch-type batteries is usually manufactured into pouches after a certain period of time rather than being used to manufacture pouches immediately after molding, in the test examples of the present invention, it was assumed that the friction coefficient 30 days after molding was important. Meanwhile, considering that temperature conditions may vary depending on the season when storing packaging materials, measurements were performed at room temperature (25°C), high temperature (50°C), and low temperature (5°C), respectively.

### [Method of measuring friction coefficient]

Packaging materials formed by dry lamination bonding were left for 1 day, 7 days, and 30 days immediately after molding, and then the dynamic coefficient of friction was measured on the inner layer surface at 25°C, 50°C, and 5°C, respectively, according to ASTM D1894 standard.

### [Method of measuring forming performance]

After molding, each packaging material is left at high temperature (50°C) for 7 days, and then placed on a frame-type metal mold (10 cm × 10 cm) and fixed thereon so that the outer layer touches the edge of the metal mold, and the inner layer of the packaging material) is pressed by a square weight (10 cm (width) × 10 cm (length) × 2 cm (height); alloy stainless steel mold steel) and drawing is performed 5 times in 1 mm increments from a depth of 1 mm to 8 mm, and the maximum depth is measured when the burst phenomenon occurs 0 times at the corners of the packaging material.

Hereinafter, the present invention will be described in more detail through specific examples and comparative examples.

### Example 1

A stretched polyamide film (thickness: 25 µm), as the outer layer, and an aluminum thin film (thickness: 30 µm), as a gas barrier layer, containing a metal foil and coated with a phosphate chromate film on both sides, are bonded by dry lamination using an adhesive (a polyurethane-based two-component curable adhesive, thickness: 3 µm). The inner layer is molded using the T-die casting method. The outer layer, the gas barrier layer bonding film containing a metal foil, and the inner layer (thickness: 40 µm) consisting of a composition containing thermoplastic polyolefin were bonded by dry lamination to prepare a battery packaging material.

The inner layer consisting of a composition containing thermoplastic polyolefin was formulated to contain maleic anhydride (4 wt%) modified polypropylene (5 wt%), homopolypropylene (50 wt%), an ethylene-containing propylene copolymer (25 wt%), and amorphous propylene-based rubber (20 wt%), and oleyl palmitamide, as unsaturated secondary fatty acid amide, in an amount of 0.3 parts by weight based on a total of 100 parts by weight of components excluding the unsaturated secondary fatty acid amide.

### Examples 2 to 5 and Comparative Examples 1 to 10

Battery packaging materials were prepared in the same manner as in Example 1, except that fatty acid amides were composed under the conditions shown in Tables 1 to 3 (the content is based on 100 parts by weight of the total components excluding fatty acid amides).

### Test Example

Specimens were prepared using the battery packaging materials prepared above, and their physical properties were measured and evaluated according to the following methods, and the results are shown in Tables 2 and 3 below.

### [Methods of measurement and evaluation of physical properties]

### (1) Friction coefficient

The packaging materials molded by dry lamination bonding were each left at 25°C, 50°C, and 5°C for 1 day, 7 days, and 30 days immediately after molding, and the dynamic coefficient of friction was measured with regard to the inner layer, respectively, according to ASTM D1894 standard.

### (2) Forming performance

After molding, each packaging material was left at high temperature (50°C) for 7 days, and then placed on a frame-type metal mold (10 cm × 10 cm) and fixed thereon so that the outer layer touched the edge of the metal mold, and the inner layer of the packaging material) was pressed by a square weight (10 cm (width) × 10 cm (length) × 2 cm (height); alloy stainless steel mold steel) and drawing was performed 5 times in 1 mm increments from a depth of 1 mm to 8 mm, and the maximum depth was measured when the burst phenomenon occurred 0 times at the corners of the packaging material.

### (3) Surface blooming

Surface blooming is a phenomenon in which stains, such as white spots or patterns, appear on the surface of the film, like flower blooming, and it occurs when low-molecular weight substances from additives or raw materials migrate to the surface. When there was no migration to the surface of the packaging material, it was evaluated as "good", whereas when white staining occurred due to a migration to the surface, it was evaluated as "bad".

**[Table 1]**

| Classification | Details |
|---|---|
| Oleamide | unsaturated primary amide-based, carbon number 18, flash point 210°C |
| Erucamide | unsaturated primary amide-based, carbon number 22, flash point 230°C |
| Stearamide | saturated primary amide-based, carbon number 18, flash point 210°C |
| Behenamide | saturated primary amide-based, carbon number 22, flash point 270°C |
| Ethylene-bis-stearamide | saturated secondary bis amide-based, carbon number 38, flash point 285°C |
| Oleyl palmitamide | unsaturated secondary amide-based, carbon number 34, flash point 276°C |
| Stearyl Erucamide | unsaturated secondary amide-based, carbon number 40, flash point 410°C |
| Ethylene-bis-oleamide | unsaturated secondary bis amide-based, carbon number 38, flash point 280°C |

**[Table 2]**

| Classification | | Exam ple 1 | Exam ple 2 | Exam ple 3 | Exam ple 4 | Exam ple 5 | Exam ple 6 | Exam ple 7 |
|---|---|---|---|---|---|---|---|---|
| Type of Amide | Oleyl plamitamide | 0.3 | 0.2 | 0.1 | - | - | 0.05 | 0.4 |
| | Stearyl erucamide | - | - | - | 0.3 | - | | |
| | ethylene-bis-oleamide | - | - | - | - | 0.3 | | |
| Frict ion Coeff icien t | Immediately after molding | 0.7 | 0.7 | 0.8 | 0.7 | 0.7 | 1.0 or high er | 0.6 |
| | Room temperature (25°C) Day 1 | 0.5 | 0.5 | 0.7 | 0.6 | 0.6 | 0.8 | 0.4 |
| | Room temperature (25°C) Day 7 | 0.2 | 0.3 | 0.5 | 0.4 | 0.5 | 0.4 | 0.15 |
| | Room temperature (25°C) Day 30 | 0.15 | 0.2 | 0.3 | 0.2 | .03 | 0.4 | 0.15 |
| | Room temperature (50°C) Day 1 | 0.5 | 0.6 | 0.7 | 0.8 | 0.8 | 0.8 | 0.6 |
| | High temperature (50°C) Day 7 | 0.2 | 0.3 | 0.4 | 0.4 | 0.5 | 0.8 | 0.4 |
| | High temperature (50°C) Day 30 | 0.2 | 0.3 | 0.3 | 0.3 | 0.3 | 0.8 | 0.3 |
| | Low temperature (5°C) Day 1 | 0.5 | 0.6 | 0.7 | 0.6 | 0.6 | 0.8 | 0.6 |
| | Low temperature (5°C) Day 7 | 0.4 | 0.4 | 0.5 | 0.5 | 0.5 | 0.8 | 0.5 |
| | Low temperature (5°C) Day 30 | 0.3 | 0.3 | 0.3 | 0.3 | 0.3 | 0.8 | 0.3 |
| Forming Depth (mm) (High temperature Day 7) | | 7 | 7 | 6 | 6 | 6 | 4 | 7 |
| Surface Blooming | | good | good | good | good | good | good | poor |

**[Table 3]**

| Classification | | Comp arat ive Exam ple 1 | Comp arat ive Exam ple 2 | Comp arat ive Exam ple 3 | Comp arat ive Exam ple 4 | Comp arat ive Exam ple 5 | Comp arat ive Exam ple 6 | Comp arat ive Exam ple 7 | Comp arat ive Exam ple 8 |
|---|---|---|---|---|---|---|---|---|---|
| Typ e of Ami de | Oleamide | 0.3 | - | - | - | - | - | - | - |
| | Erucamide | - | 0.3 | 0.05 | 0.1 | 0.5 | - | - | - |
| | Stearamid e | - | - | - | - | - | 0.3 | - | - |
| | Behenamid e | - | - | - | - | - | - | 0.3 | - |
| | Ethylene- bis- stearamid e | - | - | - | - | - | - | - | 0.3 |
| | Oleyl plamitami de | | - | - | - | - | - | - | - |
| Fri cti on Coe ffi cie nt | Immediate ly after molding | 0.5 | 0.7 | 1.0 or high er | 0.9 | 0.6 | 1 | 1.0 or high er | 1.0o r high er |
| | Room temperatu re (25°C) Day 1 | 0.3 | 0.5 | 0.7 | 0.7 | 0.3 | 0.7 | 0.8 | 1 |
| | Room temperatu re (25°C) Day 7 | 0.12 | 0.15 | 0.6 | 0.5 | 0.1 | 0.5 | 0.4 | 0.7 |
| | Room temperatu re (25°C) Day 30 | 0.08 | 0.08 | 0.3 | 0.2 | 0.05 | 0.3 | 0.4 | 0.7 |
| | Room temperatu re (50°C) Day 1 | 0.6 | 0.7 | 1.0 | 0.9 | 0.6 | 0.6 | 0.5 | 0.7 |
| | High temperatu re (50°C) Day 7 | 0.6 | 0.7 | 1.0 | 0.9 | 0.5 | 0.6 | 0.5 | 0.7 |
| | High temperatu re (50°C) Day 30 | 0.8 | 0.9 | 1.0 or high er | 1.0 or high er | 1.0 | 0.7 | 0.5 | 0.7 |
| | Low temperatu re (5°C) Day 1 | 0.4 | 0.6 | 1.0 or high er | 1.0 or high er | 0.8 | 0.9 | 0.8 | 0.8 |
| | Low temperatu re (5°C) Day 7 | 0.4 | 0.5 | 1.0 | 0.8 | 0.5 | 0.8 | 0.7 | 0.8 |
| | Low temperatu re (5°C) Day 30 | 0.4 | 0.4 | .0 | 0.9 | 0.4 | 0.7 | 0.7 | 0.8 |
| Forming Depth (mm) (High temperature Day 7) | | 5 | 5 | 2 | 3 | 5 | 4 | 3 | 3 |
| Surface Blooming | | poor | good | good | good | poor | good | good | good |

Referring to Tables 2 and 3, all of the battery packaging materials (Examples 1 to 5), to which the inner layer containing an unsaturated secondary fatty acid amide in a certain content range according to the present invention was applied, after being left for 30 days at room temperature, high temperature, and low temperature, showed a friction coefficient of 0.3 or less. As a result of measuring the friction coefficients, it was found that all of the battery packaging materials (Examples 1 to 5) had a forming depth of 6-7 mm, indicating that both slipperiness and moldability were excellent, and furthermore, surface blooming was also good.

In contrast, in the case where the battery packaging material was prepared using an unsaturated primary fatty acid amide with 18 carbon atoms (Oleamide) as a slip agent (Comparative Example 1), as a result of measuring the friction coefficient after leaving the prepared battery packaging material for 30 days, it was found that the slipperiness was excellent at room temperature but decreased at high and low temperatures and the moldability was reduced due to a relatively short forming depth, and surface blooming was also shown to be poor.

Additionally, in the case where the battery packaging material was prepared using an unsaturated primary amide with 22 carbon atoms (Erucamide) as a slip agent (Comparative Examples 2 to 5), as a result of measuring the friction coefficient after leaving the prepared battery packaging material for 30 days, it was found that the slipperiness was also excellent at room temperature but decreased at high and low temperatures, and accordingly, the moldability was reduced due to a relatively short forming depth, and in the case of Comparative Example 5, where the fatty acid amide content was the highest, surface blooming was also shown to be poor.

Additionally, in the case where the battery packaging material was prepared using a saturated primary amide with 18 carbon atoms (Stearamide) as a slip agent (Comparative Example 6), as a result of measuring the friction coefficient after leaving the prepared battery packaging material for 30 days, it was found that the slipperiness was excellent at room temperature but decreased at high and low temperatures, and accordingly, the moldability was reduced due to a short forming depth.

Additionally, in the casess where the battery packaging materials were prepared using a saturated primary amide with 22 carbon atoms (Behenamide) or saturated secondary bis amide with 38 carbon atoms (Ethylene-bis-stearamide) as a slip agent (Comparative Examples 7 and 8), as a result of measuring the friction coefficients after leaving each of the prepared battery packaging materials for 30 days, it was found that their slipperiness decreased at room temperature, and high and low temperatures, and accordingly, their moldability was reduced due to a short forming depth.

However, even in the case where the battery packaging material was prepared using an unsaturated secondary amide with 24 or more carbon atoms (Oleyl palmitamide) as a slip agent, the slipperiness decreased at all conditions of room temperature, and high and low temperatures after a certain period of time when its content did not reach a certain level (Example 6), and accordingly, the moldability was reduced due to a short forming depth, whereas when its content was excessive (Example 7), it was found that the slipperiness was excellent at all conditions of room temperature, and high and low temperatures, and accordingly, the moldability was excellent, but surface blooming was also shown to be poor. From the above results, it was confirmed that with respect to battery packaging materials including unsaturated secondary fatty acid amides, there are types and contents of unsaturated secondary fatty acid amides that enable excellent slipperiness, moldability, and even surface blooming.

The preferred embodiments of the present invention have been described in detail above. The description of the present invention is for illustrative purposes, and it will be understood by those skilled in the art that other specific forms can easily be modified without changing the technical spirit or essential features of the present invention.

Therefore, the scope of the present invention is defined by the claims described later rather than the detailed description above, and it should be interpreted that all changes or modified forms derived from the meaning and scope of the claims and equivalent concepts thereof are included in the scope of the present invention.

## Claims

1. A packaging material for a battery, comprising a laminated structure of:
an outer layer consisting of a heat-resistant resin film;
a gas barrier layer comprising a metal foil; and
an inner layer consisting of a composition comprising a thermoplastic polyolefin;
wherein the composition constituting the inner layer comprises an unsaturated secondary fatty acid amide.

2. The packaging material for a battery of claim 1, wherein the unsaturated secondary fatty acid amide has a carbon number of 24 to 50.

3. The packaging material for a battery of claim 1, wherein the composition constituting the inner layer comprises at least one type of acid-modified polypropylene.

4. The packaging material for a battery of claim 3, wherein the acid-modified polypropylene has a maleic anhydride content of 1 to 10 wt%.

5. The packaging material for a battery of claim 1, wherein the composition constituting the inner layer comprises acid-modified polypropylene, homopolypropylene, an ethylene-containing propylene copolymer, and amorphous propylene-based rubber.

6. The packaging material for a battery of claim 1, wherein the composition constituting the inner layer comprises 3 to 10 wt% of acid-modified polypropylene, 30 to 60 wt% of homopolypropylene, 10 to 40 wt% of an ethylene-containing propylene copolymer, and 10 to 30 wt% of amorphous propylene-based rubber.

7. The packaging material for a battery of claim 1, wherein the unsaturated secondary fatty acid amide is comprised in an amount of 0.05 to 0.4 parts by weight based on 100 parts by weight of the total inner layer components excluding the unsaturated secondary fatty acid amide.

8. The packaging material for a battery of claim 1, wherein the heat-resistant resin is a polyamide-based resin or polyester-based resin.

9. The packaging material for a battery of claim 1, wherein the metal foil is one or more selected from the group consisting of aluminum (Al), iron (Fe), copper (Cu), nickel (Ni), tin (Sn), zinc (Zn), indium (In), and tungsten (W).

10. The packaging material for a battery of claim 1, wherein the outer layer has a thickness of 15-30 µm; the gas barrier layer comprising the metal foil has a thickness of 25-45 µm; and the inner layer has a thickness of 25 to 120 µm.

11. The packaging material for a battery of claim 1, wherein the friction coefficient of the packaging material measured according to the following method is 0.3 or less:
[a method of measuring friction coefficient]
packaging materials molded by dry lamination bonding were each left for 30 days at 25°C, 50°C, and 5°C, and then the respective dynamic coefficient of friction was measured on the inner layer surface according to ASTM D1894 standard.

12. The packaging material for a battery of claim **1,** wherein the maximum depth measured according to the following method as a forming performance is 5 mm or more:
[a method of measuring forming performance]
after molding, the packaging material is left at a high temperature (50°C) for 7 days, and the packaging material is placed on a frame-shaped metal mold (10 cm × 10 cm) so that the outer layer touches the edge of the metal mold, and a square weight is placed on the inner layer of the packaging material (alloy stainless steel mold steel; 10 cm (width) × 10 cm (length) × 2 cm (height)) is pressed and drawn 5 times from 1 mm to 8 mm deep in 1 mm increments, causing bursting at the corners of the packaging material, and the maximum depth is measured when the phenomenon of bursting on the edge portion of the packaging material occurs 0 times.
